# EUROPEAN PATENT APPLICATION

(11) **EP 0 532 197 A2**
(43) Date of publication of application: **17.03.1993**
(21) Application number: 92307742.4
(22) Date of filing: 25.08.1992
(51) Int. Cl.: G06F 1/00, E05B 49/00

(54) **Access control mechanism**

(30) Priority: 07.09.1991 GB 9119123
(71) Applicant: INTERNATIONAL COMPUTERS LIMITED, Putney, London, SW15 1SW (GB)
(72) Inventor: Currie, Stephen Robert, Camberley, Surrey GU16 5TG (GB)
(74) Representative: Guyatt, Derek Charles

(57) **Abstract**

A simplified access control mechanism for a computer is described. The user presses two buttons to increment or decrement a count value displayed on a two-digit display. When a timeout expires after the last button press, the mechanism compares the count value with a stored code value and, if they are equal, access is permitted.

## Description

### Background to the Invention

This invention relates to an access control mechanism for controlling access to equipment. The invention is particularly although not exclusively concerned with controlling access to a digital computer.

It is desirable to provide a facility for locking a computer, so that it can be used only by authorised persons. One conventional way of doing this is to provide a mechanical keylock, which locks the machine and disables the keyboard. However, such a mechanism is relatively expensive in the context of a personal computer, and is difficult to retro-fit i.e. to add to existing machines.

The object of the present invention is to provide a novel form of access control mechanism which overcomes this problem.

### Summary of the Invention

According to the present invention there is provided an access control mechanism comprising:
a) means for storing an access code value,
b) means for storing a count value,
c) means for displaying the count value,
d) push-button means for incrementing the count value,
e) logic means, operative after a predetermined time from the last operation of the push-button means, for comparing the count value with the access code value and, if they match, producing a signal indicating that access is allowed.

### Brief Description of the Drawing

Figure 1 is a block diagram of a computer having an access control mechanism in accordance with the invention.

Figure 2 is a flow chart illustrating the operation of the access control mechanism.

### Description of an Embodiment of the Invention

One access control mechanism in accordance with the invention will now be described by way of example with reference to the accompanying drawings.

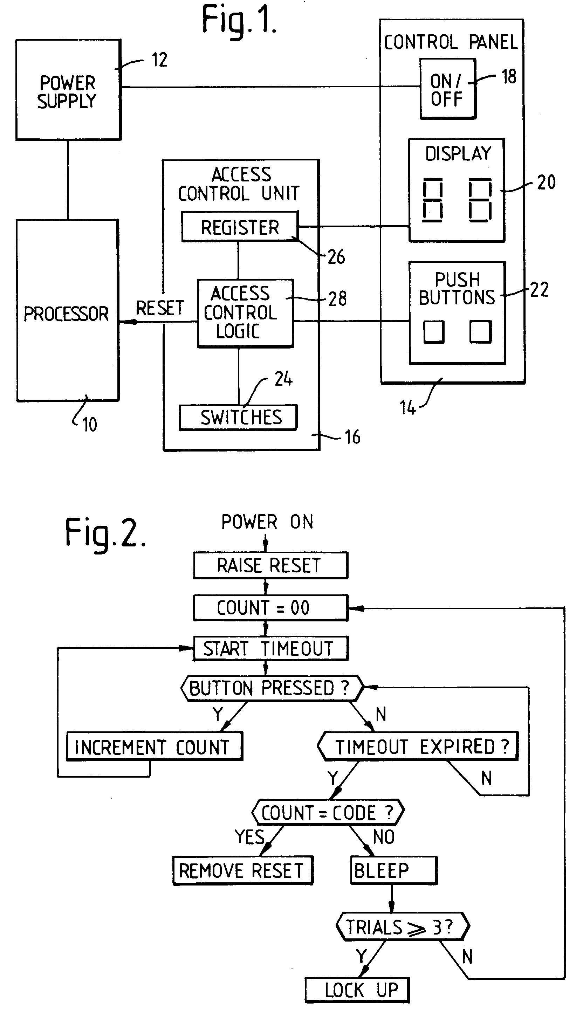

Referring to Figure 1, this shows a personal computer system comprising a processing unit 10, a power supply 12, a control panel 14, and an access control unit 16.

The control panel includes an ON/OFF switch 18 for switching the power supply 12. When the power supply is on, power is supplied to the other parts of the computer including the processor and the access control unit.

The control panel also includes a 2-digit display 20 which may conveniently be a light-emitting diode (LED) display, and 2 push buttons 22.

The access control unit 16 comprises a set of switches 24, which are accessible inside the computer housing, but are not accessible externally. These switches can be pre-set by the user to specify a 2-digit access code value.

The unit 16 also includes a register 26 which holds a 2-digit count value. This count value is displayed on the 2-digit display 20.

The switches 24, register 26 and push buttons 22 are all connected to an access control logic circuit 28.

Referring now to Figure 2, this shows the operation of the access control logic circuit 28.

When the power is switched on, the logic 28 initially applies a RESET signal to the processor, which holds the processor in a reset state, preventing it from loading (booting) any programs. The count value in the register 26 is initially set to "00".

A time-out is then started. The time-out period may typically be of the order of 1 second. The logic 28 then determines whether either of the buttons 22 has been pressed. If so, the corresponding digit in the register 26 is incremented, and the time-out is restarted, waiting for the next button press. (When either digit reaches "9", it is incremented back to "0" at the next button press).

If the time-out period expires without any button being pressed, the value in the register 26 is accepted, and is compared with the access code value set on the switches 24. If they are equal, the RESET signal is removed, allowing the processor to start running. The processor will then start to boot-up in the normal manner. At the same time, the logic 28 blanks the display 20 to "--" to hide the code number and to act as a power-on indicator.

If the count value in the register does not match the access code value, then a "bleep" is produced to indicate an error, and the count is reset to "00", allowing the user to try again. However, after three failures, the machine is locked up, and can only be unlocked by switching the power off and on again.

In summary, it can be seen that when the machine is initially switched on, the display 20 reads "00". The user can then press the buttons 22 to step the display until it shows the access code number of the machine. After a predetermined time from the last button press, if the code has been correctly entered, the machine will be allowed to run normally.

Once the machine is running, or still booting, pressing either button 22 has the effect of inhibiting keyboard access. This enables the user to temporarily lock his keyboard in a very simple manner, without the need for any keys. On return, the user simply re-enters the two-digit code as before, using the buttons 22, which unlocks the keyboard.

## Claims

1. An access control mechanism characterised by:
a) means (24) for storing an access code value,
b) means (26) for storing a count value,
c) means (20) for displaying the count value,
d) push-button means (22) for incrementing the count value,
e) logic means (28), operative after a predetermined time from the last operation of the push-button means, for comparing the count value with the access code value and, if they match, producing a signal indicating that access is allowed.

2. An access control mechanism according to Claim 1 wherein the push-button means comprises a separate push-button for each digit of the count value, allowing each digit to be incremented separately.

3. An access control mechanism according to Claim 1 or 2 where if the count value does not match the access code value, a failure is indicated, and the count value is reset.

4. An access control mechanism according to Claim 3 wherein, after a predetermined number of failures, a lock-up is generated.

5. A computer having an access control mechanism in accordance with any preceding claim.
